# EUROPEAN PATENT APPLICATION

(11) **EP 3 643 533 A1**
(43) Date of publication of application: **29.04.2020**
(21) Application number: 18820892.0
(22) Date of filing: 22.05.2018
(51) Int. Cl.: B60C 15/06, B60C 15/04

(54) **BEAD MEMBER, PNEUMATIC TIRE, AND ASSEMBLY**

(30) Priority: 19.06.2017 JP 2017119974
(71) Applicant: Bridgestone Corporation, Tokyo 104-8340 (JP)
(72) Inventor: HASEGAWA, Keiichi, Tokyo 104-8340 (JP); ARIMA, Masayuki, Tokyo 104-8340 (JP)
(74) Representative: Oxley, Robin John George
(86) International application number: PCT/JP2018/019706
(87) International publication number: WO 2018/235499

(57) **Abstract**

A bead member includes an annular bead filler made of a resin, and a deformation facilitating portion configured to facilitate an axial deformation is provided at a portion of the bead filler in a radial direction.

## Description

### TECHNICAL FIELD

The present disclosure relates to a bead member, a pneumatic tire, and an assembly.

### BACKGROUND

Heretofore, a bead filler has been known in which a hard rubber is used. On the other hand, in Patent Literature 1, a bead filler made of a thermoplastic resin is disclosed.

### CITATION LIST

### Patent Literature

PTL 1: Japanese Patent Laid-Open No. 2-151510

### SUMMARY

### (Technical Problem)

Using a resin bead filler described in Patent Literature 1 can enhance the strength of a bead portion of a tire, when compared with a case where a rubber bead filler is used. As a result, the driving stability when a tire with such bead portions is used is improved. However, a desired bead filler shape when a tire is used differs from a desired bead filler shape when a tire is fabricated. Due to this, in the case where a resin bead filler is formed into a desired shape for use when a tire is fabricated, there is caused a problem in that the tire fabrication work becomes difficult and troublesome.

Then, an object of the present disclosure is to provide a bead member including a resin bead filler whose shape can easily be changed for fabrication of a tire and for use of a tire, a pneumatic tire including the bead member, and an assembly including the pneumatic tire.

### (Solution to Problem)

A bead member according to a first aspect of the present disclosure comprises an annular bead filler made of a resin, wherein a deformation facilitating portion configured to facilitate an axial deformation is provided at a radial portion of the bead filler.

A pneumatic tire according to a second aspect of the present disclosure comprises the above bead member and a carcass turned up to wrap around the bead member.

An assembly according to a third aspect of the present disclosure comprises the pneumatic tire and a rim on which the pneumatic tire is mounted.

### (Advantageous Effect)

According to the present disclosure, there can be provided a bead member including a resin bead filler whose shape can easily be changed for fabrication of a tire and for use of a tire, a pneumatic tire including the bead member, and an assembly including the pneumatic tire.

### BRIEF DESCRIPTION OF THE DRAWINGS

In the accompanying drawings:
FIG. 1 is a partially cross-sectional view illustrating a part of a cross section of a pneumatic tire along a tire axial direction as an embodiment of the present disclosure comprising a bead member according to a first embodiment of the present disclosure, and an assembly as an embodiment of the present disclosure comprising the pneumatic tire;
FIG. 2 is an enlarged view of a vicinity of a bead portion illustrated in FIG. 1;
FIG. 3 is a cross-sectional view illustrating the bead member according to the first embodiment of the present disclosure;
FIG. 4A is a schematic diagram illustrating a schematic example of a fabrication process of the tire illustrated in FIG. 1;
FIG. 4B is an enlarged view illustrating a part of FIG. 4A in an enlarged fashion;
FIG. 5 is a schematic diagram illustrating the schematic example of the fabrication process of the tire illustrated in FIG. 1;
FIG. 6 is a schematic diagram illustrating the schematic example of the fabrication process of the tire illustrated in FIG. 1;
FIG. 7 is a cross-sectional view illustrating a bead member according to a second embodiment of the present disclosure;
FIG. 8 is a cross-sectional view illustrating a bead member according to a third embodiment of the present disclosure; and
FIG. 9 is a cross-sectional view illustrating a bead member according to a fourth embodiment of the present disclosure.

### DETAILED DESCRIPTION

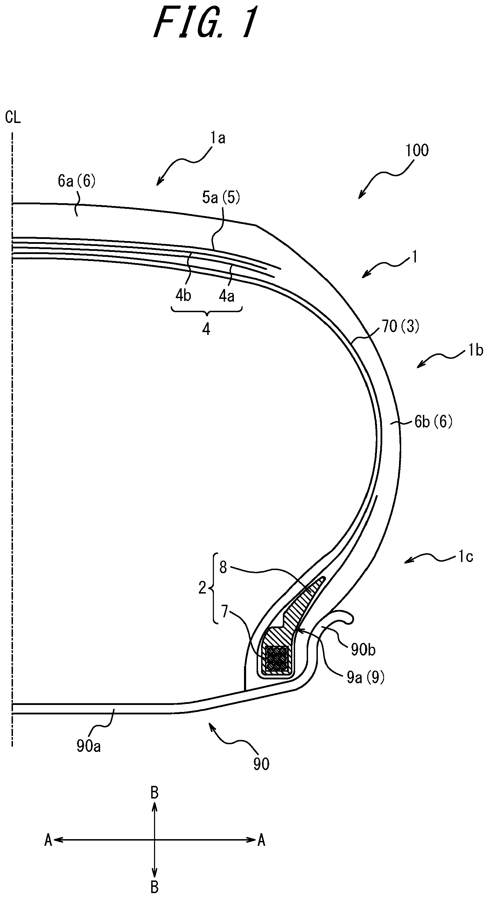

Hereinafter, embodiments of a bead member, a pneumatic tire, and an assembly according to the present disclosure will be illustrated and described with reference to FIG. 1 to FIG. 9. Members and regions that are common through respective drawings are denoted with the same reference signs.

Hereinafter, unless otherwise mentioned, dimensions, length relations, positional relations and the like of respective elements will be measured in a reference state where the pneumatic tire is attached to a rim and charged with a predetermined internal pressure and no load.

Here, the "rim" indicates an approved rim in an applicable size (a measuring rim in Standards Manual of ETRTO (the European Tyre and Rim Technical Organisation), and a design rim in Year Book of TRA (the Tire and Rim Association, Inc.)) described or to be described in future in an industrial standard effective in a district where the pneumatic tire is produced and used, for example, JATMA Year Book of JATMA (the Japan Automobile Tyre Manufacturers Association) in Japan, Standards Manual of ETRTO in Europe, Year Book of TRA in U.S or the like (that is, the above "rim" also includes a size that can be included in the above industrial standard in future, in addition to the existing size. Examples of "the size to be described in future" include sizes described as "future developments" in 2013 edition of Standards Manual of ETRTO). However, it is considered that a rim having a size that is not described in the above industrial standard is a rim having a width corresponding to a bead width of the pneumatic tire.

Additionally, "the predetermined internal pressure" indicates an air pressure (a maximum air pressure) corresponding to a maximum load capability of a single wheel in an applicable size and ply rating described in the above JATMA Year Book or the like. It is considered that a pressure having a size that is not described in the above industrial standard is an air pressure (the maximum air pressure) corresponding to the maximum load capability prescribed for each vehicle to which the tire is installed.

### <First Embodiment>

FIG. 1 is a cross-sectional view of an assembly 100 including a pneumatic tire 1 (hereinafter, referred to as a "tire 1") and a rim 90. Specifically, FIG. 1 is a cross-sectional view illustrating a cross section of the tire 1 taken along a tire axial direction A including a tire rotational axis (hereinafter, referred to as a "tire's axial section"). FIG. 1 only illustrates a half portion on one side in the tire axial direction A with a tire equatorial plane CL as a boundary, and omits depiction of a half portion on the other side, and the other half portion also has a similar configuration.

### <Rim 90>

The tire 1 is mounted on the rim 90. Specifically, the rim 90 includes a rim seat portion 90a where a bead member 2, which will be described later, of the tire 1 is attached to an outer side in a tire radial direction B and a rim flange portion 90b that projects on the outer side in the tire radial direction B from each end of the rim seat portion 90a in a tire axial direction A. The rim flange portion 90b is located on the outer side of the corresponding bead member 2 in a tire width direction (the same direction as the tire axial direction A) and restricts a movement of the bead member 2 on the outer side in the tire width direction. This can restrain a bead portion 1c, which will be described later, of the tire 1 from being dislocated from the rim seat portion 90a.

### <Tire 1>

As illustrated in FIG. 1, the tire 1 comprises a pair of bead members 2, a carcass 3, a belt 4, a band 5, and a coating rubber 6. In the tire 1 of the present embodiment, a tread portion 1a, a pair of sidewall portions 1b arranged on opposite sides of the tread portion 1a and a bead portion 1c disposed continuously with each sidewall portion 1b comprise the pair of annular bead members 2, the carcass 3, the belt 4, the band 5 and the coating rubber 6 described above.

### [Bead Member 2]

The bead member 2 is embedded in the bead portion 1c and includes an annular bead core 7 and an annular bead filler 8 made of a resin which is located on the outer side of the bead core 7 in the radial direction. Hereinafter, as a matter of convenience in description, a radial direction of the bead core 7, a radial direction of the bead filler 8, and the tire radial direction B of the tire 1 will be described simply as a "radial direction B". Furthermore, hereinafter, for the convenience of the description, an axial direction of the bead core 7, an axial direction of the bead filler 8 and the tire axial direction A of the tire 1 will be described simply as "the axial direction A". Additionally, a circumferential direction of the bead core 7, a circumferential direction of the bead filler 8 and a tire circumferential direction of the tire 1 will be described simply as "the circumferential direction".

The resin bead filler 8 includes a deformation facilitating portion 9. The deformation facilitating portion 9 is a portion that is provided at a portion of the resin bead filler 8 in the radial direction B to facilitate a deformation in the axial direction A. The deformation facilitating portion 9 can realize the bead filler 8 that can easily change its shape for fabrication of a tire and for use of a tire.

As a resin material that forms the resin bead filler 8, a thermoplastic elastomer, a thermoplastic resin, a resin that crosslinks by heat or an electron beam or a resin that cures by thermal dislocation can be used, but it is preferable to use the thermoplastic elastomer. Examples of the thermoplastic elastomer include polyolefin thermoplastic elastomer (TPO), polystyrene thermoplastic elastomer (TPS), polyamide thermoplastic elastomer (TPA), polyurethane thermoplastic elastomer (TPU), polyester thermoplastic elastomer (TPC), and dynamic crosslinking thermoplastic elastomer (TPV). Furthermore, examples of the thermoplastic resin include polyurethane resin, polyolefin resin, vinyl chloride resin, and polyamide resin. Furthermore, as the thermoplastic resin material, a resin material can be used in which, for example, a deflection temperature under load (under a load of 0.45 MPa) prescribed in ISO75-2 or ASTM D648 is 78°C or more, a tensile yield strength prescribed in JIS K7113 is 10 MPa or more, a tensile rupture elongation (JIS K7113) similarly prescribed in JIS K7113 is 50% or more, and Vicat softening temperature (A-method) prescribed in JIS K7206 is 130°C or more. It is preferable that the resin material of the bead filler 8 has a tensile elastic modulus (prescribed in JIS K7113: 1995) of 50 MPa or more. Furthermore, it is preferable that the tensile elastic modulus of the resin material of the bead filler 8 has an upper limit of 1000 MPa or less. Note that the resin material of the bead filler 8 mentioned herein does not contain a rubber (an organic polymer material that exhibits a rubber elasticity at normal temperature).

### [Carcass 3]

The carcass 3 straddles across a pair of bead portions 1c, more specifically across the bead cores 7 of the pair of bead members 2, and toroidally extends. Additionally, the carcass 3 has at least a radial structure.

Furthermore, the carcass 3 comprises one or more (one in the present embodiment) carcass plies 70 formed by arranging a carcass cord at an angle of, for example, 75° to 90° to the circumferential direction (a direction orthogonal to a paper surface in FIG. 1). This carcass ply 70 comprises a ply main body located between a pair of bead cores 7, and a ply turn-up portion turned up from an inner side to an outer side in a tire width direction about the bead core 7 at each of opposite ends of the ply main body. Additionally, the bead filler 8 extending in a tapered manner to the outer side in the radial direction B is disposed between the ply main body and the turned-up portion. In other words, the carcass 3 is turned up to wrap around the bead member 2. As the carcass cord, a polyester cord is adopted in the present embodiment. Besides this cord, an organic fiber cord made of nylon, rayon, aramid or the like may be adopted, or if necessary, a steel cord may be adopted. Furthermore, the number of the carcass plies 70 may be two or more.

### [Belt 4]

The belt 4 comprises one or more layers (two layers in an example illustrated in FIG. 1) of belt layers arranged on an outer side of a crown portion of the carcass 3 in the radial direction B. The belt 4 of the present embodiment comprises a first belt layer 4a laminated on an outer surface of the carcass 3 in the radial direction B, and a second belt layer 4b laminated on an outside of the first belt layer 4a in the radial direction B. Each of the first belt layer 4a and the second belt layer 4b is formed of a belt ply formed by disposing a belt cord that is the steel cord in an inclined manner at an angle of 10° to 40° to the circumferential direction. These two belt plies are superimposed with inclination directions of the belt cords being different from each other. Consequently, the belt cords of the belt plies intersect each other, to heighten a belt rigidity, and an almost entire width of the tread portion 1a is reinforced with a hoop effect. In the present embodiment, the first belt layer 4a located on the inner side in the radial direction B is formed to be wider than the second belt layer 4b located on the outer side in the radial direction B. Consequently, in the present embodiment, the first belt layer 4a located on the inner side in the radial direction B extends in the tire width direction to the outer side of the second belt layer 4b located on the outer side in the radial direction B.

However, the second belt layer 4b located on the outer side in the radial direction B may be formed to be wider than the first belt layer 4a located on the inner side in the radial direction B. That is, the second belt layer 4b located on the outer side in the radial direction B may be configured to extend in the tire width direction to the outer side of the first belt layer 4a located on the inner side in the radial direction B. Furthermore, the belt 4 of the present embodiment comprises two belt layers, but may comprise only one belt layer or three or more belt layers.

### [Band 5]

The band 5 comprises one or more layers (one layer in the example illustrated in FIG. 1) of band layers disposed on an outer side of the belt 4 in the radial direction B. The band 5 of the present embodiment comprises a single band layer 5a laminated on an outer surface of the second belt layer 4b of the belt 4 in the radial direction B. The band layer 5a covers an entire region of the belt 4 in the axial direction A at a position on the outer side of the belt 4 in the radial direction B. The band layer 5a comprises a band ply formed by spirally winding a nylon cord that is a band cord of organic fibers at an angle of 10° or less, preferably 5° or less to the circumferential direction. Note that the band 5 may comprise a plurality of band layers laminated in the radial direction B, or the band 5 is not provided as required.

### [Coating Rubber 6]

The coating rubber 6 comprises a tread rubber 6a and a side rubber 6b. The tread rubber 6a is disposed on an outer side of the band 5 in the radial direction B. Although not illustrated, a tread pattern is formed with a groove or the like extending in the axial direction A or the circumferential direction on an outer surface of the tread rubber 6a in the radial direction B. The side rubber 6b is formed integrally with the tread rubber 6a, and covers an outside of the carcass 3 in the tire width direction. Note that "the tread rubber 6a" means a rubber of a portion that comes in contact with a road surface.

Note that an inner liner is disposed as an air impervious layer on an inner surface of the tire 1 illustrated in FIG. 1. As a material of the inner liner, for example, a butyl-based rubber can be used.

### [Bead Core 7 and Bead Filler 8]

Hereinafter, description will be made as to further details and characteristics parts of the bead core 7 and the bead filler 8 of the bead member 2.

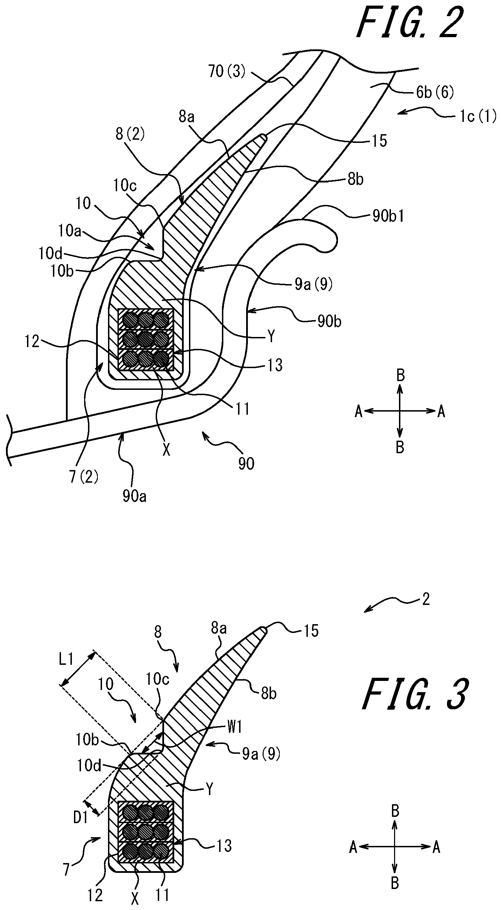

FIG. 2 is an enlarged view of the bead portion 1c of the tire 1 illustrated in FIG. 1. Furthermore, FIG. 3 is a cross-sectional view of a single unit of the bead member 2 in a cross section parallel to the axial direction A including a central axis of the bead core 7. Hereinafter, for the convenience of the description, the cross section illustrated in FIG. 3 will be referred to as "the bead core axial cross section".

As illustrated in FIG. 2 and FIG. 3, the bead core 7 of the present embodiment comprises an annular body 13 in a state where a strip member 12 formed by coating one or more (three in an example illustrated in FIG. 2 and FIG. 3) bead wires 11 with a wire coating resin X is wound a plurality of times and laminated. The strip member 12 of the present embodiment has a band shape.

The strip member 12 of the present embodiment can be formed by coating an outer peripheral side of the bead wires 11 with the molten wire coating resin X, followed by cooling and solidifying. The strip member 12 of the present embodiment has a rectangular cross section outer shape in a cross section orthogonal to an extending direction of the member. Specifically, the strip member 12 having the band shape in the present embodiment has a cross section outer shape of a rectangle comprising long sides extending in the axial direction A and short sides extending in the radial direction B in tire axial cross-sectional view (see FIG. 1 and FIG. 2). In the strip member 12 of the present embodiment, three bead wires 11 linearly arranged via a space in the axial direction A are coated with the wire coating resin X, and the above described cross section outer shape of the rectangle is formed by the wire coating resin X that coats a circumference of the bead wire 11.

The annular body 13 of the present embodiment is formed by winding the strip member 12 while laminating the strip member in the radial direction B. In the annular body 13 of the present embodiment, the strip member 12 is laminated in at least three stacks in the radial direction B at an arbitrary position in the circumferential direction. The stacks are joined to each other, for example, by winding the strip member 12 while melting the wire coating resin X by hot plate welding or the like, and solidifying the molten wire coating resin X. Alternatively, the stacks can be joined to each other by bonding with an adhesive or the like.

Note that the strip member 12 of the present embodiment has the cross section outer shape of the rectangle having the long sides extending in the axial direction A in tire axial cross-sectional view (see FIG. 1 and FIG. 2), but the strip member is not limited to this cross section outer shape. For example, in the same cross-sectional view, the member may be configured to have another cross section outer shape that is easily laminated, such as a cross section outer shape of a rectangle having long sides extending in the radial direction B, a cross section outer shape of a square, or a cross section outer shape of a parallelogram. The cross-sectional shape of the strip member 12 can be formed in a desired shape using, for example, an extruder. Furthermore, the number or arrangement of the bead wires 11 to be embedded in the strip member 12 is not limited to the configuration of the present embodiment, and can be appropriately designed. Furthermore, the annular body 13 of the present embodiment is configured in a state where the strip member 12 is laminated in the radial direction B, but may be an annular body configured in a state where the strip member is laminated in the axial direction A, or may be an annular body configured in a state where the strip member is laminated in both the radial direction B and the axial direction A. Thus, according to a laminating method of laminating the strip member in at least one of the radial direction B and the axial direction A, a laminated configuration of the strip member 12 can be easily achieved.

The bead wire 11 of the present embodiment is formed of the steel cord. The steel cord can comprise, for example, a steel monofilament or a stranded wire. Note that as the bead wire 11, organic fibers, carbon fibers or the like may be used.

As the resin material of the wire coating resin X of the present embodiment, the above described resin material exemplified as the resin material of the resin bead filler 8 can be utilized.

As described above, the bead wire 11 is coated with the wire coating resin X, so that a positional relation among a plurality of bead wires 11 in tire axial cross-sectional view (see FIG. 1 and FIG. 2) is hard to vary as compared with a configuration where the bead wire is coated with a rubber. Consequently, a cross-sectional shape of the bead core 7 can be further stabilized even during tire deformation or the like. Therefore, the bead core 7 having a high durability can be achieved.

Furthermore, a circumference of the annular body 13 of the present embodiment is coated with a core coating resin Y. As a resin material of the core coating resin Y, the above described resin material exemplified as the resin material of the resin bead filler 8 can be utilized. Thus, the coating of the annular body 13 with the core coating resin Y can further heighten stability of the above described cross-sectional shape of the bead core 7, and can further improve the durability of the bead core 7.

The core coating resin Y and the above described wire coating resin X may be the same resin material, or may be different resin materials. However, from a viewpoint of more simply obtaining the bead core 7 having the high durability, it is preferable that the core coating resin Y is the same resin as the wire coating resin X. The reason is that the core coating resin Y and the wire coating resin X can be easily welded or bonded. Furthermore, from a viewpoint of easily adjusting a hardness of the bead core 7, it is preferable that the core coating resin Y is the resin different from the wire coating resin X. Here, in general, the resin has a larger hardness than the rubber. Consequently, to decrease a difference in rigidity between the bead core 7 and the surrounding rubber, it is preferable that the core coating resin Y directly adjacent to the rubber has a smaller hardness than the wire coating resin X (a hardness close to that of the rubber). On the other hand, to further obtain an effect of thermal contraction, it is preferable that the core coating resin Y has a larger hardness than the wire coating resin X.

Furthermore, as the core coating resin Y, it is preferable to use a resin having a high adhesiveness to the rubber.

Thus, the bead core 7 of the present embodiment comprises the core coating resin Y. Furthermore, the bead core 7 of the present embodiment is formed in a rectangular outer shape with the core coating resin Y in bead core axial cross-sectional view (see FIG. 3). More specifically, in the cross section of the bead core 7 taken along the axial direction, an external shape of the bead core 7 takes a rectangular shape of one short side located on the inner side in the radial direction B and extending in the axial direction A, the other short side located on the outer side in the radial direction B and extending in the axial direction A (refer to a chain double-dashed line in FIG. 3), and long sides located at both sides in the axial direction A and extending in the radial direction B. Both the short sides illustrated in FIG. 3 are located symmetrically with respect to the annular body 13.

Although the bead filler 8 of this embodiment is formed integrally with the core coating resin Y that coats the bead core 7, the bead filler 8 may be formed separately from the core coating resin Y so as to be joined to the bead core 7 through fusing or bonding. However, as in this embodiment, when the bead filler 8 is formed integrally with the core coating resin Y that coats the bead core 7, a joining process of joining the bead filler 8 to the bead core 7 can be omitted, whereby the fabrication of the bead member 2 can be simplified. Additionally, the strength of the bead member 2 can be improved, whereby the durability of the bead member 2 can be enhanced. Due to this, in the assembly 100 in which the tire 1 including the bead members 2 is assembled on to the rim 90, the dislocation of the carcass 3 can be restricted further.

As has been described above, since the bead filler 8 of this embodiment is formed integrally with the core coating resin Y that coats the bead core 7, the bead filler 8 and the core coating resin Y that coats the bead core 7 are made of the same resin material. However, when the bead filler 8 and the core coating resin Y that coats the bead core 7 are formed separately, a resin material for the bead filler 8 may differ from a resin material for the core coating resin Y.

For example, an injection molding method can be made use of as a method for forming the bead filler 8 integrally with the coating portion of the bead core 7 with the core coating resin Y; however, the present disclosure is not limited to this method, and hence, the integral formation of the bead filler 8 with the bead core 7 can be realized by various methods.

The bead filler 8 of this embodiment has a tapered shape in which the width in the axial direction A gradually reduces as the bead filler 8 extends from an inner side toward an outer side in the radial direction B excluding the position where the deformation facilitating portion 9, which will be described later, is provided. More specifically, the bead filler 8 of the present embodiment has the tapered shape with the width in the axial direction A monotonously decreasing as being away from the inner side toward the outer side in the radial direction B excluding the position where the deformation facilitating portion 9, which will be described later, is provided. Note that "the width in the axial direction A gradually decreases as being away from the inner side toward the outer side in the radial direction B" means that the width in the axial direction A may gradually decrease as being toward the outer side in the radial direction B without increasing, and this configuration includes stepwise decrease. On the other hand, "the width in the axial direction A monotonously decreases as being away from the inner side toward the outer side in the radial direction B" means a configuration where the width in the axial direction A decreases continuously as being away toward the outer side in the radial direction B. That is, "monotonous decrease" is a condition of "gradual decrease".

Furthermore, the bead filler 8 is inclined to extend in the axial direction A to one side (in the tire width direction to the outer side in the present embodiment) as being toward the outer side in the radial direction B.

The bead filler 8 of the present embodiment comprises a first side surface 8a on the other side (the left side in FIG. 3) in the axial direction A which is the inner side in the tire width direction. Furthermore, the bead filler 8 of the present embodiment comprises a second side surface 8b on one side (the right side in FIG. 3) in the axial direction A which is the outer side in the tire width direction. In addition, a ridge portion 15, which continues in a circumferential direction as an outer edge of the bead filler 8 in the radial direction B, is formed by a ridgeline that is formed as a result of the first side surface 8a and the second side surface 8b intersecting each other. As illustrated in FIG. 2, the ridge portion 15 is located on the outer side of the bead core 7 in the tire width direction.

The first side surface 8a is inclined to extend in the tire width direction to the outer side as being away from the inner side toward the outer side in the radial direction B. Furthermore, the second side surface 8b is also inclined to extend in the tire width direction to the outer side as being away from the inner side toward the outer side in the radial direction B. Additionally, a width between the first side surface 8a and the second side surface 8b in the axial direction A gradually decreases, more specifically monotonously decreases as being away from the inner side toward the outer side in the radial direction B excluding the position where the deformation facilitating portion 9, which will be described later, is provided

### [Deformation Facilitating Portion 9 of Bead Filler 8]

Next, the deformation facilitating portion 9 of the bead filler 8 will be described in detail. The deformation facilitating portion 9 of this embodiment is a constricted portion 9a where a width in the axial direction A is locally narrowed. That is, the deformation facilitating portion 9 of this embodiment is made up of the constricted portion 9a where the width in the axial direction A is locally reduced narrower than a circumference in the radial direction B. Forming the deformation facilitating portion 9 by the constricted portion 9a can realize the deformation facilitating portion 9 by the simple configuration.

Specifically speaking, a recessed portion 10 making up the constricted portion 9a of this embodiment is formed on a side surface of the bead filler 8 in the axial direction A. As a result, the bead filler 8 can be made to deform easily in at least one direction in the axial direction A. In particular, in this embodiment, the bead filler 8 is inclined in such a manner as to extend toward one side (a right side in FIG. 3) in the axial direction A that constitutes an outer side in the tire width direction, and the recessed portion 10 of the constricted portion 9a is formed on the first side surface 8a of the other side (a left side in FIG. 3) in the axial direction A that constitutes an inner side in the tire width direction. Additionally, in the bead core axial cross-sectional view (see FIG. 3), a recessed space 10a is defined in the recessed portion 10 of this embodiment. As a result, the bead filler 8 that is made of the resin is made to easily deform to the inner side in the tire width direction so as to reduce the recessed space 10a. Forming the deformation facilitating portion 9 in the way described above can enhance the operability in fabrication of a tire by facilitating a turn-up process of turning up a carcass ply 70 when molding a green tire (a raw tire) that constitutes a base of the tire 1. The recessed space 10a is filled with a nearby rubber material that flows thereinto at the time of vulcanization molding. Hereinafter, an example of the turn-up process of the carcass ply 70 will be described in detail.

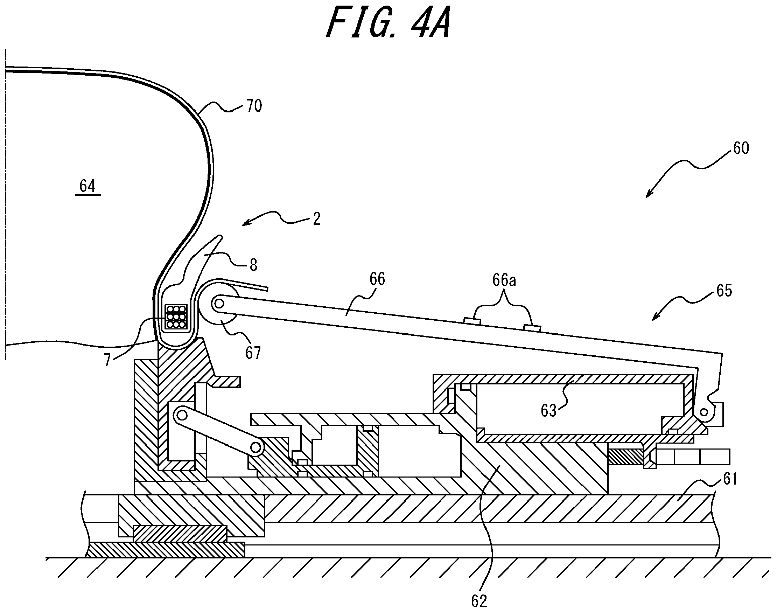

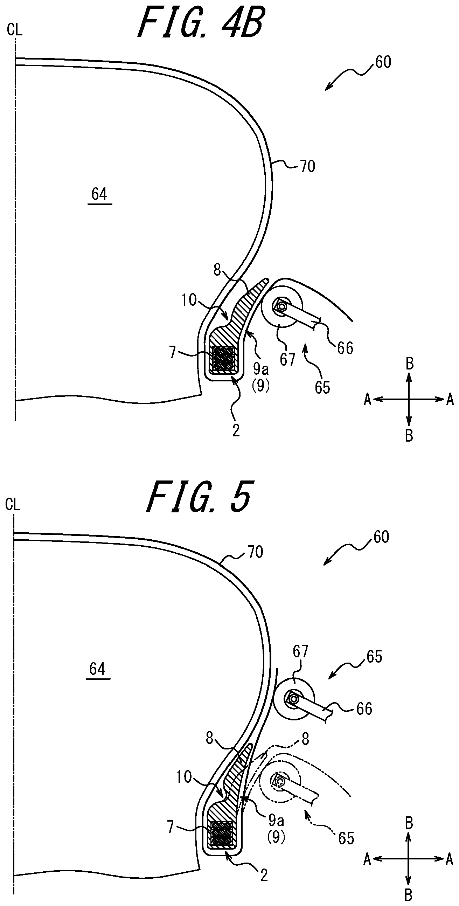

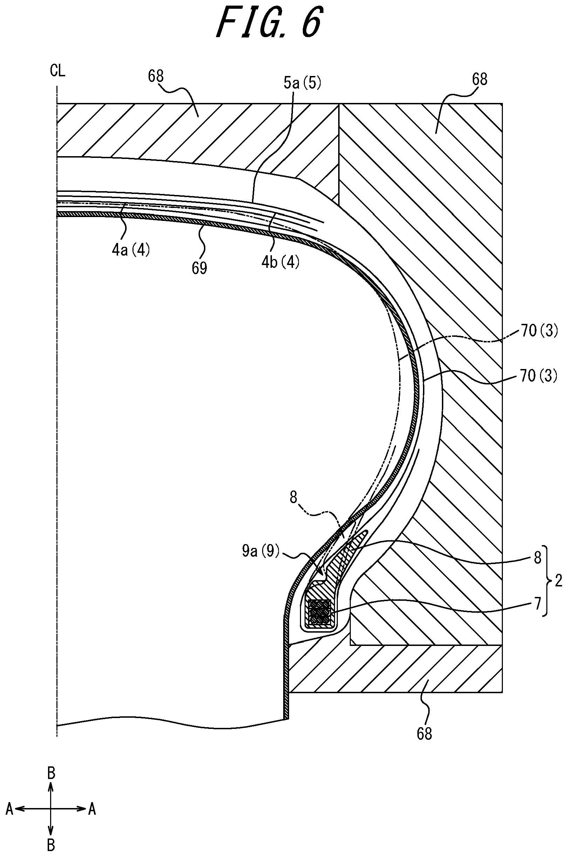

FIGS. 4 to 6 are schematic diagrams illustrating schematically an example of a fabrication process of the tire 1. Specifically, FIGS. 4A, 4B, and 5 are diagrams illustrating an example of the turn-up process for molding a green tire that constitutes a base of the tire 1. More specifically, FIG. 4B is an enlarged view illustrating a part of FIG. 4A in an enlarged fashion. FIG. 6 is a diagram illustrating an example of a process of vulcanization molding a green tire within a vulcanization mold.

A green tire constituting a base of the tire 1 is molded by a tire molding device 60 including a molding drum 61. Firstly, annular bead members 2 are attached to both ends of a carcass ply 70 that is molded into a cylindrical shape, and the portions of the carcass ply 70 where the bead members 2 are attached are supported by a pair of movable bodies 62 (only one movable body is illustrated in FIG. 4A) that can move toward and away from each other in an axial direction (which is the same as the tire width direction of a tire that is a molding target object, and hereinafter, referred to as a "drum axial direction") of the molding drum 61. Here, a molding bladder 64 that is made up of an elastic material such as rubber is mounted between both the movable bodies 62, and the carcass ply 70 is disposed on an outer circumferential side of the molding bladder 64. Next, compressed air is supplied into an inner side of the molding bladder 64 so that the molding bladder 64 is tightly secured to an inner circumferential surface of the carcass ply 70, and an intermediate portion of the carcass ply 70 in the axial direction of the molding drum 61 is caused to protrude on the outer side and expand diametrically in a radial direction of the molding drum 61 (hereinafter, referred to as a "molding drum radial direction"), so that the portions of the carcass ply 70 where both the bead members 2 are attached are caused to move toward a central side in the drum axial direction in such a manner as to approach each other by both the movable bodies 62, and turn-up mechanisms 65 attached to both the movable bodies 62 are moved toward the central side in the drum axial direction. The turn-up mechanisms 65 each include an arm member 66 configured to oscillate in the drum radial direction as each of the movable bodies 62 moves in the drum axial direction and an arm support member 63 configured to support the arm member 66 rotatably and to move in the drum axial direction relative to the movable body 62 on the movable body 62. A pressing member 67, which is configured to press against the carcass ply 70 while turning it up by means of an elastic force of an elastic band 66a that is wound around the arm member 66, is provided on a central side of each of the arm members 66 in the drum axial direction. When the turn-up mechanisms 65 attached to both the movable bodies 62 move toward the central side in the drum axial direction, the arm members 66 oscillate on the outer side in the drum radial direction, and the carcass ply 70 is turned up around the bead members by the pressing members 67 provided at tips of the arm members 66 (see FIGS. 4A, 4B, 5). As a result, turn-up portions of the carcass ply 70 are formed. Next, a belt ply, a band ply, and a tread rubber material are fitted on an outer surface of the carcass ply 70 on, for example, another molding drum, not illustrated, completing a green tire constituting a base of the tire 1. Then, as illustrated in FIG. 6, the completed green tire is vulcanized by use of a vulcanization mold 68 and a vulcanization bladder 69 to thereby complete the tire 1.

As has been described heretofore, the bead member 2 of this embodiment includes the resin bead filler 8. As a result, the bead filler 8 has difficulty in deforming at the time of molding the green tire described above, when compared with a case a rubber bead filler is used. Thus, the bead filler 8 is given a shape close to a shape of the tire 1 after the vulcanization molding, and the turn-up process of the carcass ply 70 carried out when the green tire is vulcanized is executed with the bead filler 8 given a shape closed to the shape of the carcass ply 70 of the tire 1 after the vulcanization molding. At that time, the pressing member 67 moves on the outer side in the drum radial direction while kept in abutment with an outer surface of the bead member 2 in the drum axial direction, whereby a turn-up portion of the carcass ply 70 is formed. In the case where the shape of the resin bead filler 8 is formed into the shape close to the shape of the tire 1 after the vulcanization molding, however, a tip of the bead filler 8 on the outer side in the radial direction B tends to project easily on the outer side in the drum axial direction, whereby the pressing member 67 is restricted from moving on the outer side in the drum radial direction by the bead filler 8, resulting from time to time in a case where the pressing member 67 is prevented from executing the turn-up process of the carcass ply 70. Additionally, even in the event that the pressing member 67 rides over the bead filler 8, there is a possibility that an air reservoir is formed at an inner portion of the bead filler 8 in the tire width direction, that is, a portion between the bead filler 8 and a portion constituting the ply main body portion of the carcass ply 70.

The bead filler 8 of this embodiment is inclined in such a manner as to extend toward the one side (the right side in FIG. 3) in the axial direction A that constitutes the outer side in the tire width direction and has a shape close to the shape of the tire 1 after the vulcanization molding, that is, a substantially equal shape to the shape resulting when the tire 1 is used (refer to the bead filler 8 in FIG. 4B and the bead filler 8 indicated by a chain double-dashed line in FIG. 5). On the other hand, the recessed portion 10 of the constricted portion 9a as the deformation facilitating portion 9 is formed on the side surface on the other side (the left side in FIG. 3) in the axial direction A that constitutes the inner side in the tire width direction. As a result, as illustrated in FIGS. 4B and 5, in the above-described turn-up process of the carcass ply 70 carried out when the green tire is molded, too, the bead filler 8 tends to easily deform on the inner side in the drum axial direction (the same as the inner side in the tire width direction) in such a manner as to rise on the outer side in the radial direction B by being pressed by the pressing member 67, whereby it can be difficult for the pressing member 67 to be prevented from moving on the outer side in the drum radial direction. The bead filler 8 indicated by a solid line in FIG. 5 and a chain double-dashed line in FIG. 6 indicates a state that results when the bead filler 8 deforms from the state illustrated in FIG. 4B and indicated by the chain double-dashed line in FIG. 5 to a state in which the bead filler 8 is deformed by being pressed by the pressing member 67, that is, a state resulting after the green tire is molded. Additionally, since the bead filler 8 is deformed on the inner side in the tire width direction in such a manner as to extend along the portion constituting the ply main body of the carcass ply 70 by being pressed by the pressing member 67, the formation of the air reservoir described above can be prevented.

Additionally, as illustrated in FIG. 6, the green tire is not only heated but also is pressed from the inside by the vulcanization bladder 69 when the green tire is vulcanization molded. This causes the carcass ply 70 to deform in such a manner as to expand on the outer side in the tire width direction by the heat and the pressure of the vulcanization bladder 69 when the green tire is vulcanization molded. In FIG. 6, positions of the carcass ply 70 and the bead filler 8 in a green tire before it is vulcanization molded (the same as the positions of the carcass ply 70 and the bead filler 8 that are indicated by solid lines in FIG. 5) are indicated by chain double-dashed lines. Additionally, in FIG. 6, the carcass ply 70 that expands on the outer side in the tire width direction through vulcanization molding and the bead filler 8 that deformed in association with the expansion of the carcass ply 70 are indicated by solid lines. In other words, the carcass ply 70 and the bead filler 8 that are indicated by the solid lines in FIG. 6 represent the shapes thereof for use of a tire after vulcanization molding.

Thus, as has been described heretofore, although the bead filler 8 of this embodiment is formed into the shape that is substantially equal to a shape for use of a tire as illustrated in FIGS. 4A, 4B and indicated by the chain double-dashed line in FIG. 5, since the bead filler 8 includes the deformation facilitating portion 9 described above, the bead filler 8 can easily be deformed to the shape as indicated by the solid line in FIG. 5 and the chain double-dashed line in FIG. 6 when a green tire is molded during the fabrication of a tire. As a result, the turn-up process of the carcass ply 70 can easily be executed. Additionally, since the bead filler 8 of this embodiment includes the deformation facilitating portion 9 described above, the bead filler 8 can easily be deformed from a shape that would result in a green tire (refer to the bead filler 8 indicated by the chain double-dashed line in FIG. 6) to a shape for use of a tire resulting after vulcanization molding (refer to the bead filler 8 indicated by a solid line in FIG. 6) when a green tire is vulcanization molded during fabrication of a tire. That is, according to the bead filler 8 of this embodiment, there can be realized a configuration in which the bead filler 8 can easily deform in the axial direction A when a green tire is molded and is then vulcanization molded during fabrication of a tire. That is, the bead member 2 can be realized which includes the resin bead filler 8 that can easily change its shape for fabrication of a tire and for use of a tire.

Here, in the example described above, although the bead filler 8 is formed into the shape that is substantially equal to the shape for use of a tire, it is preferable that the bead filler 8 is injection molded in advance into a shape matching a shape for molding a green tire and is thereafter deformed into a shape for use of a tire at the time of vulcanization molding. As a result, since the number of times of deformation at the time of fabrication of a tire can be reduced, the residual stress at the deformation facilitating portion 9 can be reduced as much as possible, whereby the durability is improved.

In addition, in the example described above, although a three-dimensional molding of a tire is realized by use of the bladder at the time of fabrication of a tire, the present disclosure is not limited to the three-dimensional molding using the bladder, and hence, various three-dimensional molding means such as core molding can be made use of.

In the bead core axial cross-sectional view (see FIG. 3), edge portions 10b and 10c of the recessed portion 10 of this embodiment are located away from each other in the radial direction B and are not in abutment with each other. Additionally, in the bead core axial cross-sectional view (see FIG. 3), the recessed portion 10 of this embodiment has a shape in which a groove width W1 gradually increases from a recessed bottom 10d toward the edge portions 10b and 10c. Further, the recessed portion 10 of this embodiment is formed along a full circumferential area of the bead filler 8. Furthermore, in the bead core axial cross-sectional view (see FIG. 3), a distance L1 between the edge portion 10b and the edge portion 10c of the recessed portion 10 of this embodiment is longer than a depth D1 of the recessed portion 10. In the bead core axial cross-sectional view (see FIG. 3), the distance L1 means a straight-line distance of a line component that connects the one edge portion 10b and the other edge portion 10c together. Additionally, in the bead core axial cross-sectional view (see FIG. 3), the depth D1 of the recessed portion 10 means a length of a vertical line drawn from the recessed bottom 10d to the line component.

Here, as illustrated in FIG. 2, the constricted portion 9a as the deformation facilitating portion 9 of this embodiment is located on the inner side in the radial direction B of an outer end face 90b1 of the rim flange portion 90b in the radial direction B; however, the present disclosure is not limited thereto, and hence, the deformation facilitating portion 9 may be configured in such a manner that the constricted portion 9a is located on the outer side in the radial direction B of the outer end face 90b1 of the rim flange portion 90b in the radial direction B. As in this embodiment, however, locating the constricted portion 9a as the deformation facilitating portion 9 on the inner side in the radial direction B than the outer end face 90b1 of the rim flange portion 90b in the radial direction B makes it easy for a vertical load to be supported by the rim flange portion 90b, whereby the application of a vertical load to the deformation facilitating portion 9 can be restricted. As a result, the deformation facilitating portion 9 can be prevented from being deformed by the vertical load with the pneumatic tire assembled into the assembly 100 for use of a tire.

### <Second Embodiment

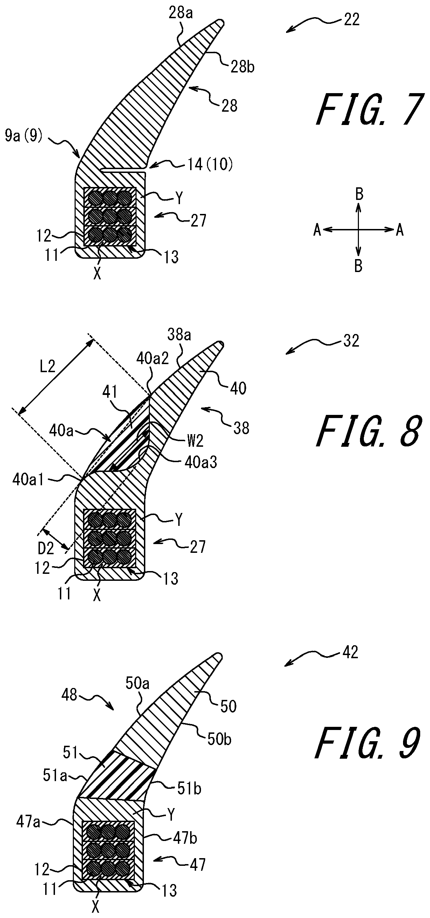

Next, referring to FIG. 7, a bead member 22 constituting another embodiment of the bead member 2 described above will be described. FIG. 7 illustrates a cross section of the bead member 22 in a bead core axial direction.

The bead member 22 illustrated in FIG. 7 includes a bead core 27 and a bead filler 28. When compared with the aforementioned bead member 2 illustrated in FIGS. 1 to 6, the bead member 22 of this embodiment differs from the bead member 2 in the configuration of a constricted portion 9a as a deformation facilitating portion 9 and remains the same as the bead member 2 in the other configurations. The different configuration is mainly described here, and description of a common configuration is omitted.

As illustrated in FIG. 7, a deformation facilitating portion 9 of the bead filler 28 of this embodiment is a constricted portion 9a where a width in an axial direction A is locally reduced, and a recessed portion 10 at the constricted portion 9a is formed on a side surface of the bead filler 28 in the axial direction A. More specifically, the recessed portion 10 of this embodiment is a slit 14 that extends in a circumferential direction. Forming the recessed portion 10 at the constricted portion 9a as the deformation facilitating portion 9 in the form of the slit 14 in the way described above makes it easy for the bead filler 28 to deform toward a side surface lying opposite to the side surface on which the slit 14 is formed in the axial direction A. The slit 14 of this embodiment is an extremely fine gap (for example, 0.1 mm to 3 mm) in a radial direction B.

More specifically, the slit 14 as the recessed portion 10 at the constricted portion 9a of this embodiment is formed on a second side surface 28b of the bead filler 28 which constitutes one side (a right side in FIG. 7) of the bead filler 28 in the axial direction A. This makes it easy for the bead filler 28 to deform toward a first side surface 28a that is opposite to the second side surface 28b where the slit 14 is formed in the axial direction A. That is, the bead filler 28, which is made of a resin, can easily be deformed on the inner side in a tire width direction. As a result, even with the bead filler 28 that is inclined in such a manner as to extend toward the one side (the right side in FIG. 7) in the axial direction A which constitutes an outer side in the tire width direction as the bead filler 28 extends on the outer side in the radial direction B, similar to the bead filler 8 of the first embodiment described above, for example, a turn-up process (see FIGS. 4 to 6) of a carcass ply carried out when molding a green tire constituting a base of a tire to be fabricated becomes easy to be executed, thus, making it possible to enhance the operability at the time of fabrication of a tire.

Additionally, with the pneumatic tire assembled into an assembly 100 for use of a tire, the slit 14 is closed securely when a vertical load is applied thereto. As a result, by making use of the slit 14 as the recessed portion 10 in the way described above, even though the deformation facilitating portion 9 is provided, the vertical load can be borne for use of a tire.

### <Third Embodiment

Next, referring to FIG. 8, a bead member 32 will be described as a further embodiment of the bead member 2 described above. FIG. 8 illustrates a cross section of the bead member 32 taken along an axial direction of a bead core.

The bead member 32 illustrated in FIG. 8 includes a bead core 37 and a bead filler 38. When compared with the bead member 2 described above and illustrated in FIGS. 1 to 6, the bead member 32 of this embodiment differs in the configuration of a deformation facilitating portion 9 but remains the same in the other configurations. The different configuration is mainly described here, and description of a common configuration is omitted.

As illustrated in FIG. 8, the bead filler 38 of this embodiment includes a first resin portion 40 made up of a first resin and a second resin portion 41 made up of a second resin whose fusing point is lower than that of the first resin. Then, a deformation facilitating portion 9 of the bead filler 38 of this embodiment is made up of the second resin portion 41. Further, a constricted portion of the first resin portion 40 lying adjacent to the second resin portion 41 also corresponds to the deformation facilitating portion 9. Forming the second resin portion 41 of the resin having a low fusing point at which the second resin portion 41 easily deforms when heated while easily hardening when cooled can realize the bead filler 38 which easily deforms at the time of vulcanization molding during fabrication of a tire while hardening to hardly deform for use of a tire after completion. That is, the strength of the bead filler can be enhanced for use of a tire, while realizing the bead filler that can easily change its shape for fabrication of a tire and for use of a tire.

The first resin for the first resin portion 40 and the second resin for the second resin portion 41 can be selected from resin materials of which the bead filler 38 can be formed.

More specifically, the second resin portion 41 of this embodiment is provided in a depressed portion 40a that is formed on at least one side surface of the first resin portion 40 in an axial direction A. As a result, the first resin portion 40 is made to easily deform toward the side surface where the depressed portion 40a where the second resin portion 41 is disposed is provided. Then, the bead filler 38 of this embodiment is inclined in such a manner as to extend toward one side (a right side in FIG. 8) in the axial direction A which constitutes an outer side in a tire width direction as the bead filler 38 extends on the outer side in a radial direction B. In the first resin portion 40 of this embodiment, the depressed portion 40a is formed on a first side surface 38a on the other side (a left side in FIG. 8) in the axial direction A which constitutes an inner side in the tire width direction, and the second resin portion 41 is disposed in the depressed portion 40a.

In other words, the bead filler 38 has an overlapping area where the first resin portion 40 and the second resin portion 41 overlap each other in the axial direction A over a predetermined range. Then, in this overlapping area, a width of the second resin portion 41 in the axial direction A is greater than a width of the first resin portion 40 in the axial direction A in a position in the radial direction B where the width of the second resin portion 41 in the axial direction A becomes maximum. In this way, since the width of the first resin portion 40 in the axial direction A is small in the position in the radial direction B where the second resin portion 41 is provided, that is, in the position of the depressed portion 40a, also with the first resin portion 40, similar to the constricted portion 9a as the deformation facilitating portion 9 of the first embodiment described above, compared with a position lying adjacent to the depressed portion 40a in the radial direction B, the first resin portion 40 is made to easily deform in the axial direction A in the position where the depressed portion 40a is provided. As a result, when the second resin portion 41 comes into a state where the second resin portion 41 easily deforms during vulcanization molding, the first resin portion 40 also comes into a state where the first resin portion 40 easily deforms in the axial direction A in the position of the depressed portion 40a in the radial direction B. That is, at the time of vulcanization molding during fabrication of a tire, the bead filler 38 easily deforms in the axial direction A in the position of the depressed portion 40a in the radial direction B in such a manner as to follow an expanding deformation of a carcass ply (refer to the carcass ply 70 in FIG. 6). As a result, the bead filler 38 can deform to a shape suitable for use of a tire. In this way, the resin bead filler 38 can be realized which can easily change its shape for fabrication of a tire and for use of a tire.

In a cross-sectional view taken along an axial direction of a bead core (see FIG. 8), the second resin portion 41 of this embodiment is disposed in such a manner as to fill an interior of the depressed portion 40a fully, however, the second resin portion 41 may be disposed in such a manner as to fill only a part of the interior of the depressed portion 40a. Additionally, the second resin portion 41 of this embodiment is disposed in such a manner as to extend along a full circumferential area of the bead filler 38, however, the second resin portion 41 may be disposed to extend along only a part of the circumferential area of the bead filler 38. However, taking the strength of the bead filler 38 for use of a tire into consideration, as in the second resin portion 41 of this embodiment, the second resin portion 41 is preferably disposed along the full circumferential area of the bead filler 38. Additionally, a side surface on the other side (a left side in FIG. 8) in the axial direction A of the second resin portion 41 disposed in the depressed portion 40a which constitutes an inner side in the tire width direction is formed into a curved surface which project convexly so as to be flush with other portions of the first side surface 38a than the depressed portion 40a.

In the bead core axial cross-sectional view (see FIG. 8), edge portions 40a1 and 40a2 of the depressed portion 40a of this embodiment are positioned away from each other in the radial direction B and are not in abutment with each other. In the bead core axial cross-sectional view (see FIG. 8), the depressed portion 40a of this embodiment has a shape in which a groove width W2 gradually increases from a recessed bottom 40a3 toward the edge portions 40a1 and 40a2. In addition, the depressed portion 40a of this embodiment is formed along a full circumferential area of the bead filler 38. Further, in the bead core axial cross-sectional view (see FIG. 8), a distance L2 between the edge portion 40a1 and the edge portion 40a2 of the depressed portion 40a of this embodiment is longer than a depth D2 of the depressed portion 40a. In the bead core axial cross-sectional view (see FIG. 8), the distance L2 means a straight-line distance of a line component that connects the one edge portion 40a1 and the other edge portion 40a2 together. Additionally, in the bead core axial cross-sectional view (see FIG. 8), the depth D2 of the depressed portion 40a means a length of a vertical line drawn from the recessed bottom 40a3 to the line component.

### <Fourth Embodiment

Next, referring to FIG. 9, a bead member 42 will be described as an embodiment different from the bead member 32 described above. FIG. 9 illustrates a cross section of the bead member 42 taken along an axial direction of a bead core.

The bead member 42 illustrated in FIG. 9 includes a bead core 47 and a bead filler 48. When compared with the bead member 32 described above and illustrated in FIG. 8, the bead member 42 of this embodiment differs in the configuration of a second resin portion as a deformation facilitating portion 9 but remains the same in the other configurations. The different configuration is mainly described here, and description of a common configuration is omitted.

As illustrated in FIG. 9, the bead filler 48 of this embodiment includes a first resin portion 50 made up of a first resin and a second resin portion 51 made up of a second resin whose fusing point is lower than that of the first resin. Then, a deformation facilitating portion 9 of the bead filler 48 of this embodiment is made up of the second resin portion 51. Forming the second resin portion 51 of the resin having a low fusing point at which the second resin portion 51 easily deforms when heated while easily hardening when cooled can realize, similar to the bead filler 38 described above, the bead filler 48 which easily deforms at the time of vulcanization molding during fabrication of a tire while hardening to hardly deform for use of a tire after completion. That is, the strength of the bead filler can be enhanced for use of a tire, while realizing the bead filler that can easily change its shape for fabrication of a tire and for use of a tire.

The first resin for the first resin portion 50 and the second resin for the second resin portion 51 can be selected from resin materials of which the bead filler 48 described above can be formed.

More specifically, the second resin portion 51 of this embodiment is provided to lie adjacent to an inner side of the first resin portion 50 in a radial direction B. In other words, the second resin portion 51 neither continues to nor connects directly to the bead core 47. The second resin portion 51 is linked with the bead core 47 via the first resin portion 50. As a result, the bead filler 48 can be made to easily deform toward both sides in an axial direction A for vulcanization molding during fabrication of a tire. This enables the bead filler 48 to easily deform in the axial direction A in such a manner as to follow an expanding deformation of a carcass ply (refer to the carcass ply 70 in FIG. 6) at the time of vulcanization molding during fabrication of a tire. As a result, the bead filler 48 can deform to a shape suitable for use of a tire. In this way, the resin bead filler 48 can be realized which can easily change its shape for fabrication of a tire and for use of a tire.

Side surfaces 51a and 51b on both sides of the second resin portion 51 in the axial direction A are formed into curved surfaces which project convexly so as to be flush with side surfaces 50a and 50b on both sides of the first resin portion 50 in the axial direction A and side surfaces 47a and 47b on both sides of the bead core 47 in the axial direction A, respectively.

The bead member, the pneumatic tire and the assembly according to the present disclosure are not limited to the specific configurations described in the respective above described embodiments, and can be variously modified and changed without departing from the gist of the claims. In addition, in the second embodiment to the fourth embodiment, the bead member is only described, but the bead members described in the second embodiment to the fourth embodiment are also applicable to a tire similar to the tire 1 described in the first embodiment, and an assembly in which the tire is mounted on the rim.

### INDUSTRIAL APPLICABILITY

The present disclosure relates to a bead member, a pneumatic tire and an assembly.

### REFERENCE SIGNS LIST

- 1: pneumatic tire
- 1a: tread portion
- 1b: sidewall portion
- 1c: bead portion
- 2: bead member
- 3: carcass
- 4: belt
- 4a: first belt layer
- 4b: second belt layer
- 5: band
- 5a: band layer
- 6: coating rubber
- 6a: tread rubber
- 6b: side rubber
- 7: bead core
- 8: bead filler
- 8a: first side surface
- 8b: second side surface
- 9: deformation facilitating portion
- 9a: constricted portion
- 10: recessed portion
- 10a: recessed space
- 10b, 10c: edge portion
- 10d: recessed bottom
- 11: bead wire
- 12: strip member
- 13: annular body
- 14: slit
- 15: ridge portion
- 22, 32, 42: bead member
- 27, 37, 47: bead core
- 28, 38, 48: bead filler
- 28a: first side surface
- 28b: second side surface
- 38a: first side surface
- 40: first resin portion
- 40a: depressed portion
- 40a1, 40a2: edge portion
- 40a3: recessed bottom
- 41: second resin portion
- 47a, 47b: side surface of bead core
- 50: first resin portion
- 50a, 50b: side surface of first resin portion
- 51: second resin portion
- 51a, 51b: side surface of second resin portion
- 60: tire molding device
- 61: molding drum
- 62: pair of movable bodies
- 63: arm support member
- 64: molding bladder
- 65: turn-up mechanism
- 66: arm member
- 66a: elastic band
- 67: pressing member
- 68: vulcanization mold
- 69: vulcanization bladder
- 70: carcass ply
- 90: rim
- 90a: rim seat portion
- 90b: rim flange portion
- 90b1: end face
- 100: assembly
- A: tire axial direction or an axial direction of the bead core
- B: tire radial direction or a radial direction of the bead core
- CL: tire equatorial plane
- D1, D2: depth of recessed portion
- L1, L2: distance over groove portion of recessed portion
- W1, W2: groove width of recessed portion
- X: wire coating resin
- Y: core coating resin

## Claims

1. A bead member comprising:
an annular bead filler made of a resin, wherein
a deformation facilitating portion configured to facilitate an axial deformation is provided at a portion of the bead filler in a radial direction.

2. The bead member according to claim 1, comprising:
an annular bead core coated with a core coating resin,
wherein the bead filler is formed integrally with the core coating resin.

3. The bead member according to claim 2, wherein the bead core comprises an annular body in a state where a strip member formed by coating one or more bead wires with a wire coating resin is wound a plurality of times and laminated, and
a circumference of the annular body is coated with the core coating resin.

4. The bead member according to claim 3, wherein the annular body of the bead core has a state where the strip member is laminated in at least one of the radial direction and an axial direction.

5. The bead member according to any one of claims 1 to 4,
wherein the deformation facilitating portion of the bead filler is a constricted portion in which a width in an axial direction is locally narrowed.

6. The bead member according to claim 5,
wherein a recessed portion constituting the constricted portion is formed on a side surface of the bead filler in the axial direction.

7. The bead member according to claim 6,
wherein the bead filler is inclined in such a manner as to extend toward one side in the axial direction as the bead filler extends on an outer side in a radial direction, and
wherein the recessed portion at the constricted portion is formed on a side surface on the other side of the bead filler in the axial direction.

8. The bead member according to claim 6,
wherein the recessed portion at the constricted portion constitutes a slit that extends in a circumferential direction.

9. The bead member according to claim 8,
wherein the bead filler is inclined in such a manner as to extend toward one side in the axial direction as the bead filler extends on an outer side in a radial direction, and
wherein the slit is formed on a side surface on the one side of the bead filler in the axial direction.

10. The bead member according to any one of claims 1 to 4,
wherein the bead filler comprises a first resin portion made up of a first resin and a second resin portion made up of a second resin whose fusing point is lower than that of the first resin, and
wherein the deformation facilitating portion is made up of the second resin portion.

11. The bead member according to claim 10,
wherein the second resin portion is provided in a depressed portion that is formed on a side surface on at least one side of the first resin portion in the axial direction.

12. The bead member according to claim 10,
wherein the second resin portion is provided adjacent to an inner side of the first resin portion in a radial direction.

13. A pneumatic tire comprising:
the bead member according to any one of claims 1 to 12; and
a carcass that is turned up to wrap around the bead member.

14. An assembly comprising:
the pneumatic tire according to claim 13; and
a rim on which the pneumatic tire is mounted.

15. The assembly according to claim 14,
wherein the rim is located on an outer side of the bead member in a tire width direction and comprising a rim flange portion configured to restrict the bead member from moving on the outer side in the tire width direction, and
wherein the deformation facilitating portion is located on an inner side in a tire radial direction than an end face of the rim flange portion that lies on an outer side in the tire radial direction.
